## Europäisches Patentamt

## European Patent Office

## Office européen des brevets

(19)

(11) Publication number: **0 000 802**
**B2**

(12) # NEW EUROPEAN PATENT SPECIFICATION

(45) Date of publication of the new patent specification:
**12.07.89**

(21) Application number: **78200129.1**

(22) Date of filling: **03.08.78**

(51) Int. Cl.⁴: **F 16 G 5/16**

(54) **Metal driving belt.**

(30) Priority: **04.08.77 NL 7708639**

(43) Date of publication of application:
**21.02.79 Bulletin 79/4**

(45) Publication of the grant of the patent:
**30.12.81 Bulletin 81/52**

(45) Mention of the opposition decision:
**12.07.89 Bulletin 89/28**

(84) Designated Contracting States:
**BE CH DE FR GB LU NL SE**

(56) References cited:
**DE-A-2 116 930**
**DE-A-2 557 724**
**FR-A-2 031 782**
**FR-E-81 703**
**NL-A-7 312 089**
**NL-C-142 767**

**Fischer Handbücher, Lexikon Technik und exakte**
**Naturwissenschaften, Band 8, Ausgabe November**
**1972, pages 2449, 2402, 2412**

(73) Proprietor: **Van Doorne's Transmissie B.V., Dr.**
**Hub van Doorneweg 120 Postbus 500, NL- 5026**
**RA Tilburg (NL)**

(72) Inventor: **Hendriks, Emerie Frederik Marie, Ten**
**Borchwardlaan 172, NL- 5591 Le Heeze (N.Br.) (NL)**

(74) Representative: **Rosenthal, Saul, Dr., c/o**
**Vereenigde Octrooibureaux Nieuwe Parklaan 107,**
**NL- 2587 BP The Hague (NL)**

EP 0 000 802 B2

## Description

### Metal driving belt

This invention relates to a driving V-belt suitable to transmit a torque between expanding pulleys formed of pairs of conical discs defining a V-shaped space between them for receiving the driving belt, which driving belt comprises a carrier in the form of one or a plurality of endless, metal belts having a continuous series of metal transverse members freely slidable with respect to the carrier thereon, and wherein, in the pushing run of the belt, successive transverse members are in contact with each other and relative movement between these transverse members is opposed by friction.

Such a driving belt is known from Dutch patent 142 767, in which the operation of the driving belt, which transmits the torque by means of pushing force, is explained. Such a driving belt is particularly suitable for use in an infinitely variable transmission.

A drawback of such a driving belt is that under certain working conditions the transverse members may shift in transverse direction to cause heavy wear. During this lateral shifting the transverse members strike the flanks of the belt or belts forming the carrier.

To solve this problem, it is proposed in Dutch patent application 7 312 089 to provide the transverse members with fixing means which fully prevent shifting in transverse direction. To this end it is proposed to provide the transverse members with interengaging means.

Practice has shown, however, that such a solution is not satisfactory, because the slightest freedom of relative lateral movement between two successive transverse members will result in an impermissibly great slidability in transverse direction over a number of transverse members.

It is an object of the present invention to provide a driving belt of the type described above, while preventing wear due to shifting of the transverse members in transverse direction.

To this end, either one or both of the adjacent surfaces of each pair of adjacent transverse members is or are provided with friction-increasing means.

Experiments have shown that the detrimental shifting of the transverse members in transverse direction occurs in the pushing run of the driving belt, if the torque being transmitted is relatively small, i.e. only in the situation where a relatively slight mutual pushing force between the transverse members is present. In the slack run, where there is no pushing force at all, and, in the other run, if the transverse members are pushed onto one another with great force, no detrimental shifting occurs.

From these findings it has been concluded that the cause of shifting of the transverse members in transverse direction should be found in the shifting of the transverse members along one another in such a manner that a force in transverse direction is transmitted between the successive members. This may create a situation in which the series of tranverse members perform, as it were, a vibration.

It has been found that, by increasing the coefficient of friction between the transverse members it is possible to avoid the abovementioned detrimental shifting in a technically easily feasible way. The relative shifting of the transverse members in the slack run, which is not prevented in this way, appears to have no adverse effect in practice.

In accordance with a preferred embodiment of the present invention, the friction-increasing means comprise a knurling of small depth, for instance some hundredths of a millimeter. According to the invention, this knurling can be formed by grinding the surface in two non-parallel directions, called cross-grinding.

It is important that the knurling on the surface is such that it is maintained during use of the driving belt, and consequently does not easily wear out, or disappear during running in of the driving belt.

For the sake of completeness, reference is made to DE-A-2 557 724, which describes a V-belt with transverse members provided throughout their surfaces with means preventing relative transverse shifting. These are, however, interlocking means rather than friction-increasing means.

One embodiment of the driving belt according to the invention will now be described, by way of example, with reference to the accompanying drawings. In said drawings:

Fig. 1 shows schematically a sectional view of two pulleys with a driving belt running thereon;

Fig. 2 shows a transverse member in front elevational view.

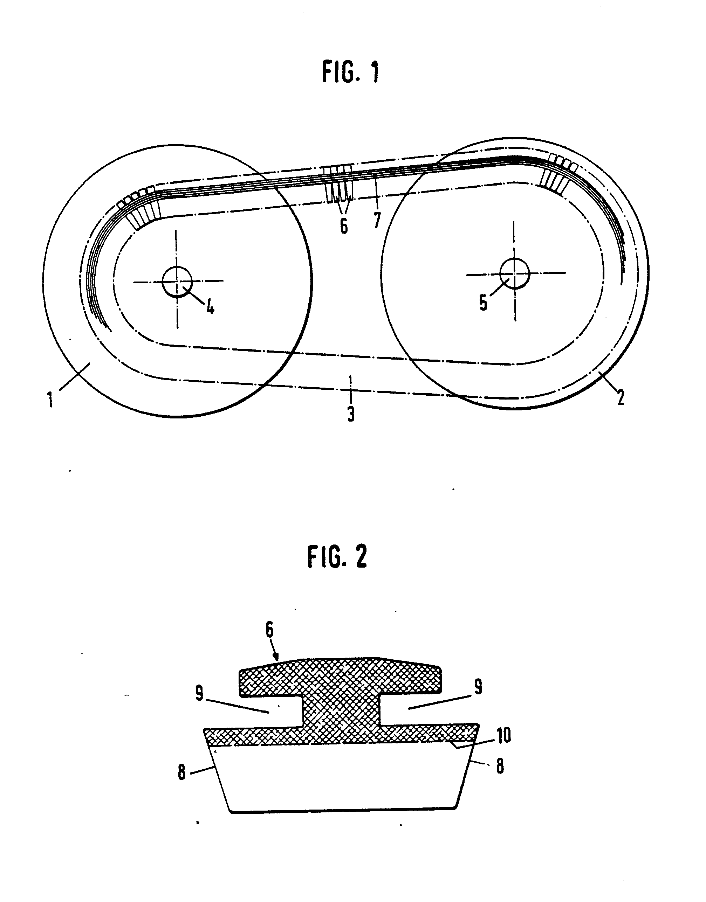

Fig. 1 shows schematically two V-shaped pulleys 1, 2. The running diameter of the driving belt 3 on a pulley 1, 2 can be varied by adjusting the mutual distance of the conical pulley parts of the V-shaped pulley 1, 2. The ratio of the rotary speeds between the schematically shown shafts 4 and 5 can be varied infinitely in this way. The driving belt 3 comprises a number of metal transverse members 6 slidably mounted on an endless carrier 7. This carrier 7 may comprise, for example, a number of metal belts combined into one or more belt packs. Each of the preferably two belt packs comprise a number, for example ten, of superposed metal belts which are slidable about and with respect to each other. (In Fig. 1 a pack of only 4 belts is shown).

The transverse members 6 are slightly tapered radially inwardly of the driving belt, which enables the driving belt 6 to run about the pulley with curvature, as shown in Fig. 1.

During operation of the driving belt there is such a tension in carrier 7 that transverse members 6 are passed between pulleys 1 and 2 in a substantially linear path. A torque is thereby transmitted between pulleys 1 and 2 due to the pushing force with which the transverse members push against each other in the loaded run of the driving belt.

Fig. 2 shows a transverse member 6 (shown in Fig. 1 in side elevational view) in front elevational view. Transverse member 6 comprises two side surfaces 8 adapted to cooperate with the conical pulley parts of the V-shaped pulley 1, 2 and two recesses 9, each adapted to receive a belt pack 7, as shown. The broken line 10 in Fig. 2 indicates the tilting line of the tilting zone, i.e. the place where the transverse member 6 starts tapering. In the substantially straight, pushing run of the driving belt, the transverse members are in contact with each other with the surface shown in cross-hatched lines in Fig. 2 above the broken line 10. This hatching indicates the two grinding directions in which the surface has been ground so as to produce such grooves in the surface that with relatively small pressure forces between the transverse members the mutual friction in transverse direction is great.

## Claims

1. A driving V-belt suitable to transmit a torque between expanding pulleys (1, 2) formed of pairs of conical discs which define a V-shaped space between them for receiving the driving belt, which driving belt comprises a carrier in the form of one or a plurality of endless, metal belts (7) having a continous series of metal transverse members (6) freely slidable with respect to the carrier thereon, and wherein, in the pushing run of the belt, successive transverse members are in contact with each other and relative movement between these transverse members is opposed by friction, characterized in that either one or both of the adjacent surfaces of each pair of adjacent transverse members (6) is or are provided with friction-increasing means.

2. A driving belt according to claim 1 characterized in that the friction-increasing means comprise a knurling.

3. A driving belt according to claim 2, characterized in that the knurling is formed by grinding the surface in two non-parallel directions.

## Revendications

1. Courroie de transmission trapézoïdale appropriée pour transmettre un couple entre des poulies extensibles (1, 2) formées de paires de disques coniques délimitant un espace en V entre eux pour recevoir la courroie de transmission, courroie de transmission qui comprend un support se présentant sous la forme d'une ou plusieurs courroies métalliques sans fin (7) comportant une série continue d'éléments transversaux métallique (6) pouvant glisser librement par rapport au support, des éléments transversaux successifs étant, dans le brin d'entraînement de la courroie, en contact mutuel et le mouvement relatif entre ces éléments transversaux étant réduit par le frottement, caractérisée en ce que l'une ou chacune des deux surfaces adjacentes de chaque paire d'éléments transversaux adjacents (6) comporte des moyens d'augmentation du frottement.

2. Courroie de transmission selon la revendication 1, caractérisée en ce que les moyens d'augmentation du frottement consistent en un moletage.

3. Courroie de transmission selon la revendication 2, caractérisée en ce que le moletage est formé par meulage de la surface dans deux directions non parallèles.

## Patentansprüche

1. Keilförmiger Treibriemen zum Übertragen eines Drehmomentes zwischen aufweitbaren Riemenscheiben (1, 2), die aus jeweils zwei konischen Scheiben bestehen, welche einen keilförmigen Zwischenraum zur Aufnahme des Treibriemens bilden, wobei der Treibriemen einen Träger in Form von einem oder mehreren endlosen Metallbändern (7) und eine kontinuierliche Folge vom metallischen Quergliedern (6), die auf dem Träger frei verschiebbar sind, aufweist und wobei im Schubtrum des Treibriemens aufeinanderfolgende Querglieder einander berühren und eine Relativbewegung zwischen diesen Quergliedern durch Reibungsschluss verhindert wird, dadurch gekennzeichnet, dass jeweils eine oder beide der aneinanderliegenden Oberflächen jedes Paares von benachbarten Quergliedern (6) mit einer Reibungsverstärkung ausgestaltet sind.

2. Treibriemen nach Anspruch 1, dadurch gekennzeichnet, dass die Reibungsverstärkung eine Rändelung aufweist.

3. Treibriemen nach Anspruch 2, dadurch gekennzeichnet, dass die Rändelung durch Einschleifen der Oberfläche in zwei nicht parallelen Richtungen gebildet ist.

## FIG. 1

## FIG. 2